Europäisches Patentamt

European Patent Office

Office européen des brevets

(11) Veröffentlichungsnummer: **0 150 333**
A1

## (12) EUROPÄISCHE PATENTANMELDUNG

(21) Anmeldenummer: **84114511.3**

(22) Anmeldetag: **29.11.84**

(51) Int. Cl.⁴: **B 62 D 1/18**

(30) Priorität: **13.01.84 DE 3400993**

(43) Veröffentlichungstag der Anmeldung: **07.08.85**
**Patentblatt 85/32**

(84) Benannte Vertragsstaaten: **FR GB IT SE**

(71) Anmelder: **Lemförder Metallwaren AG, Postfach 1220, D-2844 Lemförde (DE)**

(72) Erfinder: **Burmeister, Joachim, Dr.-Ing., Immenweg 2, D-4515 Bad Essen (DE)**

(54) **Sicherheitslenkwelle aus Innenwelle und Aussenrohr.**

(57) Die Sicherheitslenkwelle besteht aus einem Außenrohr und einer Innenwelle, die teilweise ineinandergreifen und durch Verbindungsmittel gegen axiale Verschiebung bis zu einer bestimmten Größe axialer Schiebekräfte miteinander verbunden sind. Diese Verbindungsmittel bestehen aus von außen in dem Außenrohr angebrachten Kerben.

## Sicherheitslenkwelle aus Innenwelle und Außenrohr

Beschreibung:

Die Erfindung betrifft eine Sicherheitslenkwelle der Gattung nach dem Obergriff des Patentanspruches 1.

Die DE-OS 16 30 376 beschreibt eine solche Sicherheitslenkwelle, bei der ein Außenrohr eine Innenwelle (Lenkspindel) umschließt. Beide Teile, das Außenrohr und die Innenwelle, sind durch einen in einer Bohrung quer zur Längsachse der beiden Teile eingesetzten Stift gegen axiale Verschiebung gesichert, wobei der Stift in seiner Stärke und in seinem Material so ausgelegt ist, daß er bei Überschreiten einer bestimmten Kraft in Achsrichtung der beiden Teile abgeschert.

Um eine spielfreie Mitnahme in Umfangsrichtung ohne kostenverursachende Paßarbeiten zu erreichen, werden bei dieser bekannten Anordnung zwei Büchsen aus elastischem Werkstoff zwischen dem Außenrohr und der Innenwelle angeordnet, durch die beide Teile spielfrei ineinander geführt sind.

Der Erfindung liegt die Aufgabe zugrunde, das gleiche Ergebnis auch ohne Zwischenschaltung von Büchsen aus elastischem Werkstoff und gleichzeitig eine weitere Vereinfachung der Herstellung solcher Sicherheitslenkwellen zu erreichen.

Erfindungsgemäß wird zur Lösung dieser Aufgabe eine Ausbildung vorgeschlagen, deren wesentliche Merkmale im Kennzeichen des Patentanspruches 1 enthalten sind.

Gegenüber dem Stande der Technik überragend ist bei einer solchen Ausbildung der Vorteil, daß durch die Anbringung der Kerben einerseits eine spielfreie Anordnung der Innenwelle in dem Außenrohr, somit eine spielfreie Mitnahme, erreicht wird und andererseits auf den bisher erforderlichen Scherstift oder auf vergleichbare andere Mittel zur Begrenzung der axial maximal zu übertragenden Schiebekraft verzichtet werden kann. Daneben ist der Vorteil von Bedeutung, daß die maximal übertragbare Schiebekraft in sehr einfacher Weise bestimmbar ist, nämlich durch eine entsprechende Anzahl von Kerben hintereinander und/oder auf dem Umfang verteilt.

Außenrohr und Innenwelle mit entsprechend übereinstimmenden Innenabmessungen des Außenrohres und Außenabmessungen der Innenwelle können ohne Bearbeitung von Paßflächen ineinander gesteckt und durch von außen etwa radial zur Längsachse beider Teile gerichtete, kerbenbewirkende Kräfte kalibriert und auf diese Weise miteinander verbunden werden, wozu insbesondere Preßen od.dgl. mit entsprechenden Kerbwerkzeugen geeignet sind, um auch in der Serienfertigung übereinstimmende, gleichbleibende Arbeitsergebnisse zu erzielen. Vorteilhaft ist die Anbringung der Kerben im Bereich von an sich bekannten Abflachungen des Profils des Außenrohres und der Innenwelle, weil hier Kerben kontrollierter anzubringen sind. Die Kerben können in Anpassung an die Größe der maximal zulässigen Schiebekraft punktförmig, linienförmig oder in anderen Konturen ausgeführt sein. Bei größeren Abweichungen zwischen den Maßen des Außenrohres und der Innenwelle ist ggf. durch radialen Druck von außen auf das Außenrohr eine Vorkallibrierung vorzunehmen, bevor die Kerben angebracht werden.

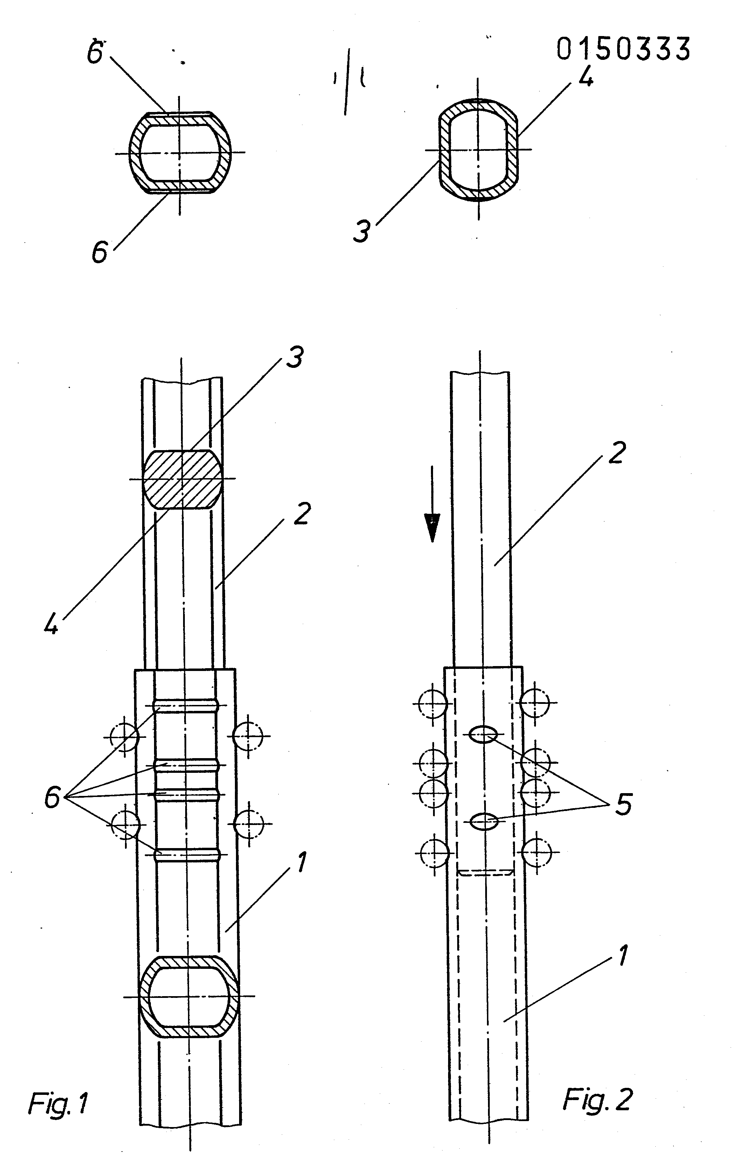

Ein Ausführungsbeispiel der Erfindung ist zur näheren Erläuterung auf der Zeichnung dargestellt. Die Figuren 1 und 2 zeigen das Ausführungsbeispiel in zwei zueinander um 90° versetzten Seitenansichten mit jeweils darüber angeordneten Querschnitten des Außenrohres, die in Achsrichtung versetzt gelegt sind.

Das Außenrohr 1 und die Innenwelle 2 bilden eine Sicherheitslenkwelle. Die Innenwelle 2 ist mit einem Außenprofil, welches auf das Innenprofil des Außenrohres 1 abgestimmt ist, mit ihrem einen Ende innerhalb des Außenrohres angeordnet. Dargestellt ist ein Beispiel mit rundem Querschnitt des Außenrohres und der Innenwelle, wobei jedoch an zwei sich gegenüberliegenden Seiten Abflachungen 3 und 4 sowohl der Innenwelle als auch des Außenrohres vorgesehen sind, wobei diese Abflachungen zueinander parallele Flächen bilden. Das Außenrohr 1 ist im Bereich des in ihn eingreifenden Endes der Innenwelle 2 mit Kerben 5 bzw. 6 versehen, welche durch eine radial von außen in Richtung zur Längsachse der beiden Wellenteile gerichtete Kräfte angebracht sind. Vorteilhaft ist die Anbringung solcher Kerben 6 im Bereich der Abflachungen 3 und 4 beider Wellenteile. In Anpassung an die maximal zulässige Schiebekraft sind mehrere Kerben 6 parallel nebeneinander und mit einem Abstand voneinander angeordnet. Entsprechend können Kerben 5 auch im Bereich der Rundungen vorgesehen sein. Das Ausführungsbeispiel verdeutlicht, daß Kerben sowohl lineare als auch punktförmige Kontur aufweisen können. Durch die Anbringung der Kerben 5 und 6 erfolgt in diesem Bereich eine Kallibirierung des Außenrohres auf die Abmessungen und das Profil der Innenwelle, so daß beide vorwiegend durch Reibschluß miteinander verbunden werden. Durch die Kerbung erfolgt aber gleichzeitig ein Eindringen des Materials des Außenrohres in die Oberfläche der Innenwelle, wodurch eine begrenzte axiale Schiebekräfte standhaltende Verbindung zwischen den beiden Teilen entsteht. Je nach der Zahl und nach der Tiefe der angebrachten Kerben können diese Schiebekräfte vorherbestimmt werden. Für die Gestaltung des Werkzeuges zur Anbringung der Kerben kann es vorteilhaft sein, die Kerben jeweils sich paarweise gegenüberliegend vorzusehen, um die bei der Kerbung entstehenden Kräfte innerhalb eines Werkzeuges aufzunehmen.

Sicherheitslenkwelle aus Innenwelle und Außenrohr

Patentansprüche :

1. Sicherheitslenkwelle aus Außenrohr mit Innenprofil und Innenwelle mit übereinstimmendem Außenprofil, die beide teilweise ineinandergreifen und Verbindungsmittel aufweisen, die bis zu einer vorbestimmten Schiebekraft gegen axiale Verschiebung ineinander wirksam sind, dadurch gekennzeichnet, daß die Innenwelle (2) gegenüber dem Innenprofil des Außenrohres (1) lediglich eine Axialbewegungen gegenüber dem Außenrohr ermöglichende geringere Außenabmessung aufweist und daß die Verbindungsmittel durch am Mantel des Außenrohres (1) unter etwa radial zur Achse des Außenrohres gerichtete Kräfte angebrachte Kerben (5, 6) gebildet sind.

2. Sicherheitslenkwelle nach Anspruch 1, dadurch gekennzeichnet, daß in Anpassung an die vorbestimmte Schiebekraft in axialer Richtung zur Überwindung der Verbindungsmittel mehrere Kerben (5, 6) paarweise an sich gegenüberliegenden Seiten angebracht sind.

3. Sicherheitslenkwelle nach den Ansprüchen 1 und 2, dadurch gekennzeichnet, daß das Innenprofil des Außenrohres (1) und das Außenrohr der Innenwelle (2) an zwei Seitenabflachungen (3, 4) mit zueinander parallelen Flächen aufweist und daß die Kerben (6) im Bereich dieser Abflachungen (3, 4) vorgesehen sind.

4. Sicherheitslenkwelle nach den Ansprüchen 1 bis 3, dadurch gekennzeichnet, daß die Kerben (5) punktförmig angebracht sind.

5. Sicherheitslenkwelle nach den Ansprüchen 1 bis 3, dadurch gekennzeichnet, daß die Kerben (6) linienförmig angebracht sind.

6. Sicherheitslenkwelle nach den Ansprüchen 1 bis 5, dadurch gekennzeichnet, daß das Außenrohr (1) durch radiales Zusammenpressen auf das Profil der Innenwelle vorkalibiert ist.

0150333

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 508 860 (SUPERVIS) * Figuren 1-3; Seite 5, Zeile 29 - Seite 6, Zeile 25 * | 1,2,5 | B 62 D 1/18 |
| X | EP-A-0 098 184 (RENAULT) * Figuren 1-3; Seite 2, Zeile 31 - Seite 3, Zeile 12 * | 1,3,4, 6 | |
| X | PATENT ABSTRACTS OF JAPAN, Band 1, Nr. 82, 29. Juli 1977, Seite 1729 M 77; & JP-A-52-25330 (DAIHATSU KOGYO K.K.) 25-02-1977 | 1 | |
| A | DE-A-2 322 451 (REICHE) * Ganzes Dokument * | | |
| D,A | DE-A-1 630 376 (DAIMLER-BENZ) * Ganzes Dokument * ----- | | RECHERCHIERTE SACHGEBIETE (Int. Cl.4) B 62 D 1/00 |

Der vorliegende Recherchenbericht wurde für alle Patentansprüche erstellt.

| Recherchenort BERLIN | Abschlußdatum der Recherche 11-04-1985 | Prüfer STANDRING M A |
|---|---|---|